# EUROPEAN PATENT APPLICATION

(11) **EP 4 542 432 A1**
(43) Date of publication of application: **23.04.2025**
(21) Application number: 23823272.2
(22) Date of filing: 16.06.2023
(51) Int. Cl.: G06F 30/20

(54) **TOOTH RESTORATION DATA DETERMINATION METHOD, APPARATUS AND DEVICE, AND STORAGE MEDIUM**

(30) Priority: 16.06.2022 CN 202210687367
(71) Applicant: Shining 3D Tech Co., Ltd., Hangzhou, Zhejiang 311258 (CN)
(72) Inventor: CHEN, Xiaojun, Hangzhou, Zhejiang 311258 (CN); ZHANG, Huiquan, Hangzhou, Zhejiang 311258 (CN); YANG, Xi, Hangzhou, Zhejiang 311258 (CN)
(74) Representative: Dehns Germany Partnerschaft mbB
(86) International application number: PCT/CN2023/100828
(87) International publication number: WO 2023/241706

(57) **Abstract**

The present disclosure relates to a method, apparatus and device for determining tooth restoration data, and a storage medium. Firstly, a real tooth model of a target object and a standard prepared tooth model corresponding to the real tooth model are acquired, wherein the real tooth model includes a tooth to be prepared, the standard prepared tooth model includes a standard prepared body corresponding to the tooth to be prepared, and the standard prepared body is a standard prepared tooth for wearing a prosthesis; and finally, the tooth to be prepared in the real tooth model is compared with the standard prepared body in the standard prepared tooth model, so as to obtain data to be restored of the tooth to be prepared, wherein the data to be restored is data to be ground that corresponds to the restoration of the tooth to be prepared to the standard prepared body. Therefore, the accuracy of tooth restoration may be improved, and the whole process does not need to prepare a silicone rubber guide plate in advance, and is realized automatically and digitally, thereby finally simplifying the flow and reducing the time cost.

## Description

The present disclosure claims priority to Chinese Patent Application No. 202210687367X, filed to the China National Intellectual Property Administration on June 16, 2022 and entitled "Method, Apparatus and Device For Determining Tooth Restoration Data, and Storage Medium", the disclosure of which is hereby incorporated by reference in its entirety.

### Technical Field

Embodiments of the present disclosure relate to the technical field of tooth restoration, and in particular to a method, apparatus and device for determining tooth restoration data, and a storage medium.

### Background

In the field of tooth restoration, when a tooth of a user becomes diseased, a prepared tooth needs to be designed for the diseased tooth, and a prosthesis needs to be worn on the designed prepared tooth to complete a tooth restoration process.

In the related art, a design method of the prepared tooth is generally to use a pre-prepared silicone rubber guide plate and determine whether the prepared tooth is qualified or not through observation with the naked eye of the user, thereby obtaining the designed prepared tooth. However, the current design method of the prepared tooth has the disadvantages that since the user needs to observe with the naked eye, a situation of erroneous determination by the naked eye is likely to occur, and since the design process of the prepared tooth needs to prepare the silicon rubber guide plate, the design steps of the prepared tooth are increased, and the cost of the prepared tooth is increased.

### Summary

### (1) Technical problem to be solved

In order to solve the above technical problems or at least partially solve the above technical problems, the present disclosure provides a method, apparatus and device for determining tooth restoration data, and a storage medium.

### (2) Technical solution

Embodiments of the present disclosure provide a method for determining tooth restoration data. The method includes the following operations.

A real tooth model of a target object and a standard prepared tooth model corresponding to the real tooth model are acquired. The real tooth model includes a tooth to be prepared, the standard prepared tooth model includes a standard prepared body corresponding to the tooth to be prepared, and the standard prepared body is a standard prepared tooth for wearing a prosthesis.

The tooth to be prepared in the real tooth model is compared with the standard prepared body in the standard prepared tooth model, so as to obtain data to be restored of the tooth to be prepared. The data to be restored is data to be ground that corresponds to the restoration of the tooth to be prepared to the standard prepared body.

The embodiments of the present disclosure further provide an apparatus for determining tooth restoration data. The apparatus includes a model acquisition component and a restoration data determination component.

The model acquisition component is configured to acquire a real tooth model of a target object and a standard prepared tooth model corresponding to the real tooth model. The real tooth model includes a tooth to be prepared, the standard prepared tooth model includes a standard prepared body corresponding to the tooth to be prepared, and the standard prepared body is a standard prepared tooth for wearing a prosthesis.

The restoration data determination component is configured to compare the tooth to be prepared in the real tooth model with the standard prepared body in the standard prepared tooth model, so as to obtain data to be restored of the tooth to be prepared. The data to be restored is data to be ground that corresponds to the restoration of the tooth to be prepared to the standard prepared body.

The embodiments of the present disclosure further provide a device for determining tooth restoration data. The device includes:
One or more processors; and
A memory, configured to store one or more programs.

One or more programs, when executed by the one or more processors, cause the one or more processors to implement the tooth restoration data determination method provided in the first aspect.

The embodiments of the present disclosure further provide a computer-readable storage medium, in which a computer program is stored. The computer program is configured to perform the tooth restoration data determination method as provided by the embodiments of the present disclosure.

### (3) Beneficial effect

Compared with the related art, the technical solution provided by the embodiments of the present disclosure has the following advantages.

According to the method, apparatus and device for determining tooth restoration data, and the storage medium provided by the embodiments of the present disclosure, firstly, the real tooth model of the target object and the standard prepared tooth model corresponding to the real tooth model are acquired, where the real tooth model includes the tooth to be prepared, the standard prepared tooth model includes the standard prepared body corresponding to the tooth to be prepared, and the standard prepared body is the standard prepared tooth for wearing the prosthesis; and then, the tooth to be prepared in the real tooth model is compared with the standard prepared body in the standard prepared tooth model, so as to obtain the data to be restored of the tooth to be prepared, where the data to be restored is the data to be ground that corresponds to the restoration of the tooth to be prepared to the standard prepared body. Therefore, the data to be restored for restoring the tooth to be prepared to the standard prepared body may be directly determined by comparing the tooth to be prepared with the standard prepared body, so that the data to be restored can assist the user in restoring the tooth to be prepared, thereby improving the accuracy of tooth restoration. Moreover, the whole process does not need to prepare the silicone rubber guide plate in advance, and is realized automatically and digitally, thereby finally simplifying the flow and reducing the time cost.

It is to be understood that the above general description and the following detailed description are only exemplary and explanatory and not intended to limit the present disclosure.

### Brief Description of the Drawings

The accompanying drawings, which are incorporated in and constitute a part of the description, illustrate embodiments consistent with the present disclosure and, together with the description, serve to explain the principles of the present disclosure.

In order to more clearly illustrate the embodiments of the present disclosure or the technical solutions in the related art, the accompanying drawings used in the description of the embodiments or the related art will be briefly described below. It is apparent that other accompanying drawings may further be obtained by those of ordinary skill in the art according to these accompanying drawings without creative efforts.
Fig. 1 is a flowchart of a method for determining tooth restoration data in one or more embodiments of the present disclosure.
Fig. 2 is a schematic diagram of a real tooth model in one or more embodiments of the present disclosure.
Fig. 3 is a schematic diagram of a standard prepared tooth model in one or more embodiments of the present disclosure.
Fig. 4 is a flowchart of a method for determining tooth restoration data in one or more embodiments of the present disclosure.
Fig. 5 is a logical schematic diagram of a tooth model comparison in one or more embodiments of the present disclosure.
Fig. 6 is a schematic diagram of a model comparison result in one or more embodiments of the present disclosure.
Fig. 7 is a flowchart of a method for determining tooth restoration data in one or more embodiments of the present disclosure.
Fig. 8 is a logical schematic diagram of acquiring a target prepared tooth in one or more embodiments of the present disclosure.
Fig. 9 is a schematic structural diagram of an apparatus for determining tooth restoration data in one or more embodiments of the present disclosure.
Fig. 10 is a schematic structural diagram of a device for determining tooth restoration data in one or more embodiments of the present disclosure.

### Detailed Description of the Embodiments

In order to make objectives, technical solutions, and advantages of embodiments of the present disclosure clearer, the technical solutions in the embodiments of the present disclosure will be clearly and completely described below. It is apparent that the described embodiments are only part of the embodiments of the present disclosure, not all the embodiments. All other embodiments obtained by those of ordinary skill in the art on the basis of the embodiments in the present disclosure without creative work shall fall within the scope of protection of the present disclosure.

In the field of tooth restoration, when a tooth of a user becomes diseased, a series of grinding and correction operations need to be performed on the diseased tooth to obtain a designed prepared tooth, so as to firmly install and bond a tooth prosthesis such as a full crown, a veneer or an inlay on the designed prepared tooth. For example, in the process of full crown restoration and tooth preparation, a maxillofacial surface of the diseased tooth needs to be ground out first to make the diseased tooth flat, and then a buccal surface, a lingual surface, a mesial surface, and a distal surface of the diseased tooth are gradually ground off, and an undercut is eliminated as much as possible, so that an axial wall is parallel to an insertion path, thereby obtaining the designed prepared tooth, and wearing the crown on the designed prepared tooth.

It is to be noted that the design process of the prepared tooth requires high precision, especially when an anterior tooth is restored, even a very small error on the buccal surface or a slope surface of the anterior tooth may directly affect the firmness of the prosthesis installation and fixation, the correctness of the direction and angle, and the aesthetics.

However, the current design method of the prepared tooth is prone to erroneous determination by the naked eye, and since a silicone rubber guide plate needs to be prepared, the design steps of the prepared tooth are more complicated, and the cost of the prepared tooth is increased.

In order to solve the above problems, the embodiments of the present disclosure provide a method, apparatus and device for determining tooth restoration data, and a storage medium.

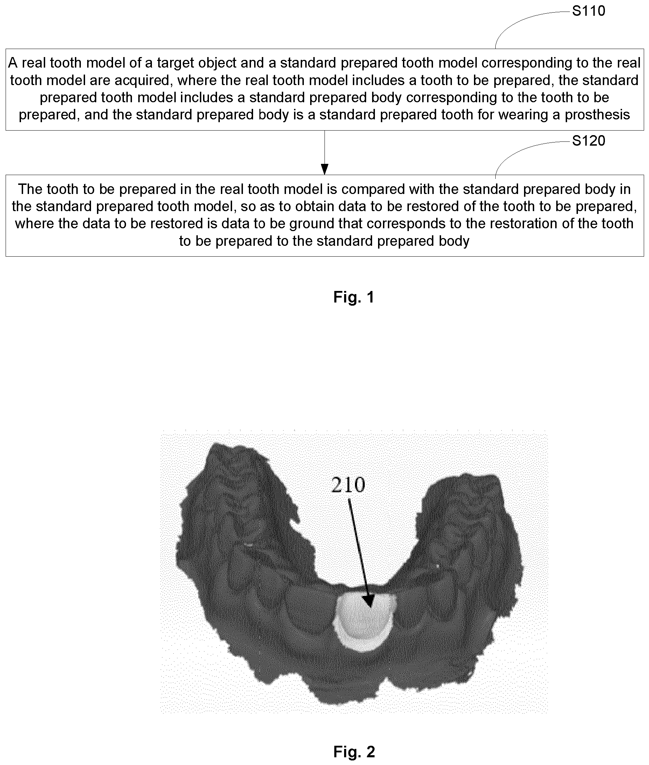

The tooth restoration data determination method is described below in conjunction with Fig. 1 to Fig. 7. In the embodiment of the present disclosure, the tooth restoration data determination method may be performed by an electronic device or a server. The electronic device may include a device with a communication function such as a tablet computer, a desktop computer, or a notebook computer, or may include a device simulated by a virtual machine or a simulator. The server may be a server cluster or a cloud server.

Fig. 1 shows a flowchart of a method for determining tooth restoration data provided by one or more embodiments of the present disclosure.

As shown in Fig. 1, the tooth restoration data determination method may include the following steps.

At S110, a real tooth model of a target object and a standard prepared tooth model corresponding to the real tooth model are acquired. The real tooth model includes a tooth to be prepared, the standard prepared tooth model includes a standard prepared body corresponding to the tooth to be prepared, and the standard prepared body is a standard prepared tooth for wearing a prosthesis.

In the embodiment of the present disclosure, when tooth restoration needs to be performed on the target object, the electronic device may acquire the real tooth model of the target object and the standard prepared tooth model corresponding to the real tooth model, so as to determine data needed for restoration of the tooth to be prepared according to morphological data of the tooth to be prepared in the real tooth model and morphological data of the standard prepared body in the standard prepared tooth model.

In the embodiment of the present disclosure, the real tooth model refers to a preoperative model of the target object, which may include the tooth to be prepared and other teeth except the tooth to be prepared. The tooth to be prepared may be understood as the diseased tooth that needs to be restored.

In some embodiments, the real tooth model may be a pre-stored tooth model.

In other embodiments, the teeth in an oral cavity of the target object may be scanned in real time by an intraoral scanner, and the electronic device may acquire the real tooth model.

Fig. 2 is a schematic diagram of a real tooth model. The real tooth model includes a tooth to be prepared 210 and other teeth except the tooth to be prepared 210.

In the embodiment of the present disclosure, the standard prepared tooth model is a tooth model for assisting the user in performing tooth restoration, and the model may include a standard prepared body and other teeth except the standard prepared body.

It is to be understood that the standard prepared body may provide a reference for a restoration process of the tooth to be prepared. In a case that the morphology of the tooth to be prepared is restored to the morphology of the standard prepared body, it indicates that the tooth to be prepared for this restoration may be configured to wear the prosthesis, thereby completing the restoration process of the diseased tooth.

In the embodiment of the present disclosure, alternatively, the operation of "acquiring the standard prepared tooth model corresponding to the real tooth model" in S110 may be implemented in the following manner.

At S1101, morphological data of the tooth to be prepared in the real tooth model and morphological data of other teeth except the tooth to be prepared are acquired.

At S1102, the standard prepared body is selected from a plurality of prepared bodies acquired in advance according to the morphological data of the tooth to be prepared and the morphological data of other teeth except the tooth to be prepared.

At S1103, the standard prepared tooth model is generated based on the morphological data of the standard prepared body and the morphological data of other teeth except the tooth to be prepared.

In some embodiments, the electronic device may import the real tooth model into third-party design software, and design the prosthesis (such as the crown) through the third-party design software. In some embodiments, according to the morphological data of each tooth, the standard prepared body is selected and the morphological data corresponding to the standard prepared body is determined, and finally, the standard prepared tooth model is generated according to the morphological data of the standard prepared body and the morphological data of other teeth except the tooth to be prepared.

The plurality of prepared bodies acquired in advance may include prepared bodies designed for the teeth at different positions.

The morphological data of each tooth is configured to characterize the spatial morphology of each tooth. Alternatively, the morphological data of each tooth may include a thickness, a position, a shape, a size, etc. of each tooth, which is not limited herein.

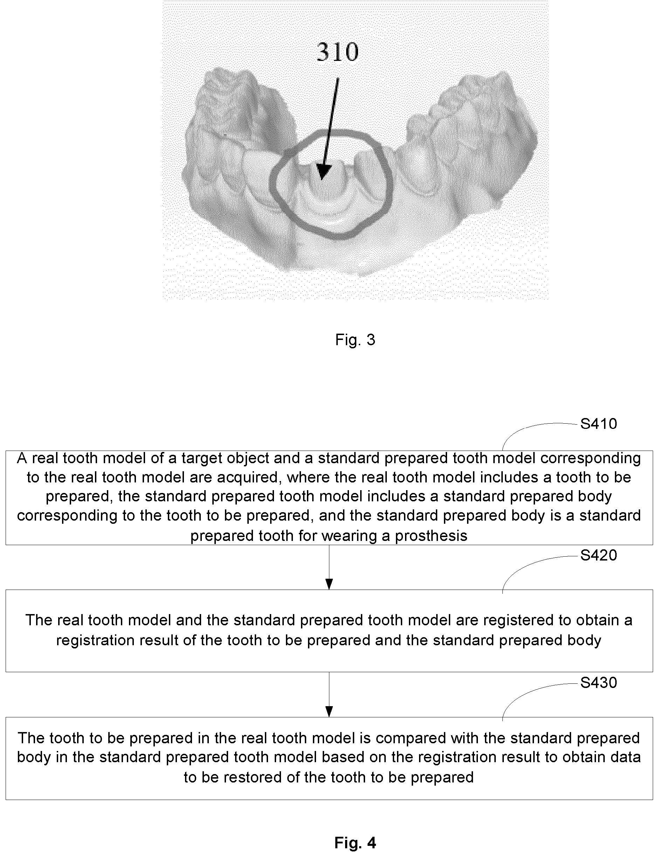

Fig. 3 is a schematic diagram of a standard prepared tooth model. The standard prepared tooth model includes a standard prepared body 310 and other teeth except the standard prepared body 310.

Therefore, in the embodiment of the present disclosure, an adaptive standard prepared body may be determined according to the morphological data of various teeth in the real tooth model, thereby generating the standard prepared tooth model adapted to the real tooth.

At S120, the tooth to be prepared in the real tooth model is compared with the standard prepared body in the standard prepared tooth model, so as to obtain data to be restored of the tooth to be prepared. The data to be restored is data to be ground that corresponds to the restoration of the tooth to be prepared to the standard prepared body.

In the embodiment of the present disclosure, the electronic device may input the real tooth model and the standard prepared tooth model into intraoral scanning software, and use the intraoral scanning software to compare the tooth to be prepared with the standard prepared body, so as to determine the data to be restored of the tooth to be prepared, so that the data to be restored is further fed back to the user, and then the user may restore the tooth to be prepared based on the data to be restored.

In some embodiments, the morphological data of the tooth to be prepared and the standard prepared body may be directly compared to obtain the data to be restored.

In other embodiments, the tooth to be prepared and the standard prepared body may be roughly registered and finely registered, and then the tooth to be prepared may be compared with the standard prepared body according to a registration result to obtain the data to be restored.

In the embodiment of the present disclosure, the data to be restored may be configured to characterize the data needed for restoration of the tooth to be prepared. Alternatively, the data to be restored may be a thickness to be ground, an angle to be ground, a thickness to be ground, etc., which is not limited herein.

According to the tooth restoration data determination method in the embodiment of the present disclosure, firstly, the real tooth model of the target object and the standard prepared tooth model corresponding to the real tooth model are acquired, where the real tooth model includes the tooth to be prepared, the standard prepared tooth model includes the standard prepared body corresponding to the tooth to be prepared, and the standard prepared body is the standard prepared tooth for wearing the prosthesis; and then, the tooth to be prepared in the real tooth model is compared with the standard prepared body in the standard prepared tooth model, so as to obtain the data to be restored of the tooth to be prepared, where the data to be restored is the data to be ground that corresponds to the restoration of the tooth to be prepared to the standard prepared body. Therefore, the data to be restored for restoring the tooth to be prepared to the standard prepared body may be directly determined by comparing the tooth to be prepared with the standard prepared body, so that the data to be restored can assist the user in restoring the tooth to be prepared, thereby improving the accuracy of tooth restoration. Moreover, the whole process does not need to prepare the silicone rubber guide plate in advance, and is realized automatically and digitally, thereby finally simplifying the flow and reducing the time cost.

In another implementation of the present disclosure, the real tooth model and the standard prepared tooth model may be registered first, and then the tooth to be prepared in the real tooth model may be compared with the standard prepared body in the standard prepared tooth model according to a registration result to obtain the data to be restored.

Fig. 4 shows a flowchart of another tooth restoration data determination method provided by one or more embodiments of the present disclosure.

As shown in Fig. 4, the tooth restoration data determination method may include the following steps.

At S410, a real tooth model of a target object and a standard prepared tooth model corresponding to the real tooth model are acquired. The real tooth model includes a tooth to be prepared, the standard prepared tooth model includes a standard prepared body corresponding to the tooth to be prepared, and the standard prepared body is a standard prepared tooth for wearing a prosthesis.

S410 is similar to S110 and is not limited herein.

At S420, the real tooth model and the standard prepared tooth model are registered to obtain a registration result of the tooth to be prepared and the standard prepared body.

In the embodiment of the present disclosure, alternatively, S420 may specifically include the following steps.

At S4201, a feature point pair of each tooth is extracted from the real tooth model and the standard tooth model.

At S4202, the feature point pairs are matched according to a preset registration direction to obtain an initial matching result of the real tooth model and the standard tooth model.

At S4203, a distance between the feature point pairs on grid patches respectively included in the real tooth model and the standard tooth model is calculated.

At S4204, the initial matching result is corrected based on the distances of all the feature point pairs on the grid patches to obtain a registration result of the tooth to be prepared and the standard prepared body.

For S4201, in response to an acquired marking operation, the feature point pair of each tooth may be extracted from the real tooth model and the standard tooth model; or, the real tooth model and the standard prepared tooth model may be processed to automatically determine the feature point pair of each tooth on the real tooth model and the standard tooth model.

The registration direction may be a comparison direction of the real tooth model and the standard prepared tooth model.

For S4202, a feature stitching algorithm may be used to roughly match the feature point pairs according to the preset registration direction to obtain a rough matching result, which may be the initial matching result.

The rough registration result may be a transformation relationship between the feature point pairs. Alternatively, the transformation relationship may include a rotation matrix and/or a translation matrix.

For S4203, since the real tooth model and the standard tooth model are gridding models, the real tooth model and the standard tooth model may be composed of grid patches respectively, and the feature point pairs may be extracted from the grid patches respectively included in the real tooth model and the standard tooth model. For each feature point pair, the distance is calculated to obtain the distances of all the feature point pairs in the grid patches, so that the real tooth model and the standard tooth model can continue to be accurately matched according to the distance.

For S4204, on the basis of rough matching, a grid matching algorithm may be used to accurately match the real tooth model and the standard tooth model. In some embodiments, the distances of all the feature point pairs in each grid patch may be weighted and then summed weighted the weighted distances to obtain an average distance value between the real tooth model and the standard tooth model. The average distance value may be configured to characterize the degree of registration between the real tooth model and the standard tooth model, and then the initial registration result is corrected according to the average distance value until the average distance value is minimized. The initial registration result with the minimum average distance value is used as the registration result of the tooth to be prepared and the standard prepared body.

It is to be noted that the above registration method may be combined with a manual registration method to ensure that a registration process between the tooth to be prepared and the standard prepared body can be continued until a matching result is obtained.

At S430, the tooth to be prepared in the real tooth model is compared with the standard prepared body in the standard prepared tooth model based on the registration result to obtain data to be restored of the tooth to be prepared.

In the embodiment of the present disclosure, alternatively, S430 may specifically include the following steps.

At S4301, a model of the tooth to be prepared is segmented from the real tooth model according to the registration result, and a standard prepared body model is segmented from the standard prepared tooth model.

At S4302, a distance between each grid patch on the model of the tooth to be prepared and each grid patch on the standard prepared body model is calculated based on normal vectors respectively corresponding to each grid patch on the model of the tooth to be prepared and normal vectors respectively corresponding to each grid patch on the standard prepared body model.

At S4303, the distance between each grid patch on the model of the tooth to be prepared and each grid patch on the standard prepared body model is used as the data to be restored of the tooth to be prepared.

For S4301, the grid patches corresponding to the tooth to be prepared and the grid patches corresponding to the standard prepared body may be determined according to the registration result, and these grid patches are segmented from the real tooth model to obtain the model of the tooth to be prepared and the standard prepared body model.

For S4302, firstly, the normal vectors respectively corresponding to each grid patch on the model of the tooth to be prepared and the normal vectors respectively corresponding to each grid patch on the standard prepared body model may be determined. Then, the distance from each grid patch on the standard prepared body model to each grid patch on the model of the tooth to be prepared in a normal direction is calculated using a comparison algorithm, and the distance between the grid patches is used as the data to be restored of the tooth to be prepared.

The data to be restored may include data needed for restoration of various positions on the tooth to be prepared, that is, how much thickness needs to be ground off each position on the tooth to be prepared to restore to the standard prepared body.

It is to be noted that in a case that the data to be restored is a positive number, it indicates that the distance is in a positive direction of the normal vector, and the tooth to be prepared corresponding to the model of the tooth to be prepared needs to be further ground out. In a case that the data to be restored is a negative number, it indicates that the distance is in a negative direction of the normal vector, and the tooth to be prepared corresponding to the model of the tooth to be prepared has been ground excessively.

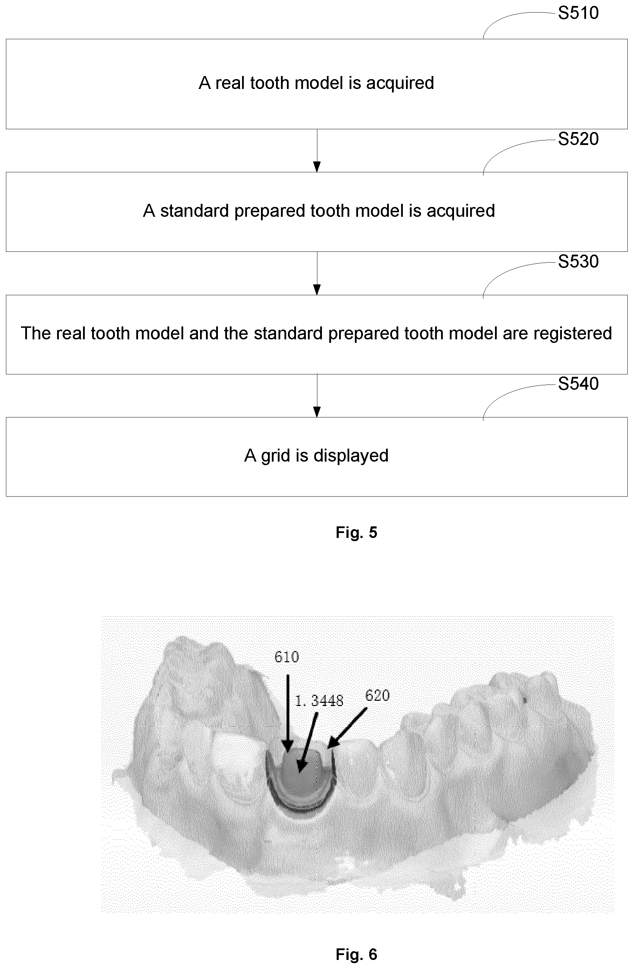

In order to facilitate the understanding of the above comparison process, Fig. 5 shows a logical schematic diagram of a tooth model comparison method provided by one or more embodiments of the present disclosure. Fig. 6 shows a schematic diagram of a model comparison result.

As shown in Fig. 5, the comparison process includes the following steps.

At S510, a real tooth model is acquired.

At S520, a standard prepared tooth model is acquired.

At S530, the real tooth model and the standard prepared tooth model are registered.
in some embodiments, in a case that the registration is successful, S540 is performed, otherwise, end.

At S540, a grid is displayed.

In some embodiments, the data to be restored of the tooth to be prepared may be calculated based on the normal vectors of the grid patches included in the real tooth model and the standard prepared tooth model.

It is to be noted that the specific implementations of various steps in Fig. 5 may refer to the above description, which will not be elaborated herein.

As shown in Fig. 6, after the real tooth model and the standard prepared tooth model are registered, there is a thickness difference between a standard prepared body 610 and a tooth to be prepared 620.

Therefore, in the embodiment of the present disclosure, the real tooth model and the standard prepared tooth model may be registered, and the tooth to be prepared in the real tooth model may be compared with the standard prepared body in the standard prepared tooth model according to a registration result, so as to accurately calculate the data to be restored, so that the user may be assisted in accurately restoring the tooth to be restored according to the accurate data to be restored, thereby ensuring the accuracy of the tooth restoration process.

In yet another implementation of the present disclosure, after the data to be restored is obtained, the data to be restored, the real tooth model, and the standard prepared tooth model may be comparatively displayed, so that restoration data is visually displayed to assist the user in performing tooth restoration.

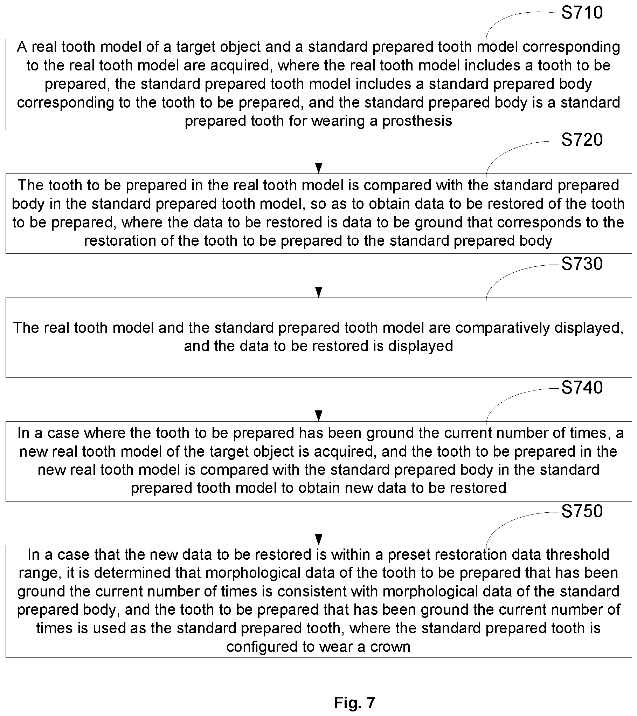

Fig. 7 shows a flowchart of yet another tooth restoration data determination method provided by one or more embodiments of the present disclosure.

At S710, a real tooth model of a target object and a standard prepared tooth model corresponding to the real tooth model are acquired. The real tooth model includes a tooth to be prepared, the standard prepared tooth model includes a standard prepared body corresponding to the tooth to be prepared, and the standard prepared body is a standard prepared tooth for wearing a prosthesis.

At S720, the tooth to be prepared in the real tooth model is compared with the standard prepared body in the standard prepared tooth model, so as to obtain data to be restored of the tooth to be prepared. The data to be restored is data to be ground that corresponds to the restoration of the tooth to be prepared to the standard prepared body.

The specific implementations of S710 to S720 may refer to the description of the above embodiments, which is not elaborated herein.

At S730, the real tooth model and the standard prepared tooth model are comparatively displayed, and the data to be restored is displayed.

In the embodiment of the present disclosure, after obtaining the data to be restored, an electronic device may display gingival lines of the real tooth model and the standard prepared tooth model in different colors according to the data to be restored, thereby comparatively displaying the two models, and displaying the data to be restored in digital form on the tooth to be prepared.

In some embodiments, the data to be restored on the tooth to be prepared corresponds to a position to be restored. Alternatively, when the data to be restored is displayed, the corresponding position to be restored may also be displayed, or after the position to be restored is clicked, the data to be restored corresponding to the position may be displayed.

It is to be noted that in a case that the data to be restored is a positive value, it indicates that thickness grinding is performed on the tooth to be restored, and in a case that the data to be restored is a negative value, it indicates that the tooth to be restored is ground excessively and no further thickness grinding is needed. When the data to be restored reaches a preset restoration data threshold, it indicates that the tooth to be prepared has been ground, and the ground tooth to be prepared may be used as a target prepared tooth for wearing the prosthesis.

In some embodiments, a corresponding relationship between the data to be restored and the display color of the gingival line may be predetermined. For example, the larger the data to be restored, the darker the display color of the gingival line, and conversely, the larger the data to be restored, the lighter the display color of the gingival line.

As shown in Fig. 6, after the position to be restored is clicked, the data to be restored corresponding to the position is 1.33448, and the gingival line between the tooth to be prepared and the standard prepared body may be displayed in the corresponding color.

Therefore, in the embodiment of the present disclosure, by comparatively displaying the real tooth model with the standard prepared tooth model, and displaying the data to be restored, restoration data may be visually displayed, and sufficient prompts may be given to a user through colors and values, so as to finally assist the user in performing tooth restoration.

At S740, in a case where the tooth to be prepared has been ground the current number of times, a new real tooth model of the target object is acquired, and the tooth to be prepared in the new real tooth model is compared with the standard prepared body in the standard prepared tooth model to obtain new data to be restored.

In the embodiment of the present disclosure, after the electronic device performs visual display, the user may grind the tooth to be prepared based on a visual display result, acquire three-dimensional scanning data of the current number of grinding times, and generate the new real tooth model based on the scanning data of the current number of grinding times, thereby acquiring the new real tooth model of the target object, and comparing the tooth to be prepared in the new real tooth model with the standard prepared body in the new standard prepared tooth model again to obtain the new data to be restored.

At S750, in a case that the new data to be restored is within a preset restoration data threshold range, it is determined that morphological data of the tooth to be prepared that has been ground the current number of times is consistent with morphological data of the standard prepared body, and the tooth to be prepared that has been ground the current number of times is used as the standard prepared tooth, where the standard prepared tooth is configured to wear a crown.

In the embodiment of the present disclosure, the electronic device may compare the new data to be restored with the preset restoration data threshold. In a case that the new data to be restored is within a preset restoration data threshold interval, it is determined that the tooth to be prepared has been ground well, and the tooth to be prepared that has been ground the current number of times may be directly used as the standard prepared tooth, so that the user may wear the crown on the standard prepared tooth later.

In the embodiment of the present disclosure, the preset restoration data threshold interval may be a numerical interval configured to determine whether the tooth to be prepared has been ground well.

Alternatively, the preset restoration data threshold interval may be [-0.2, 0.2].

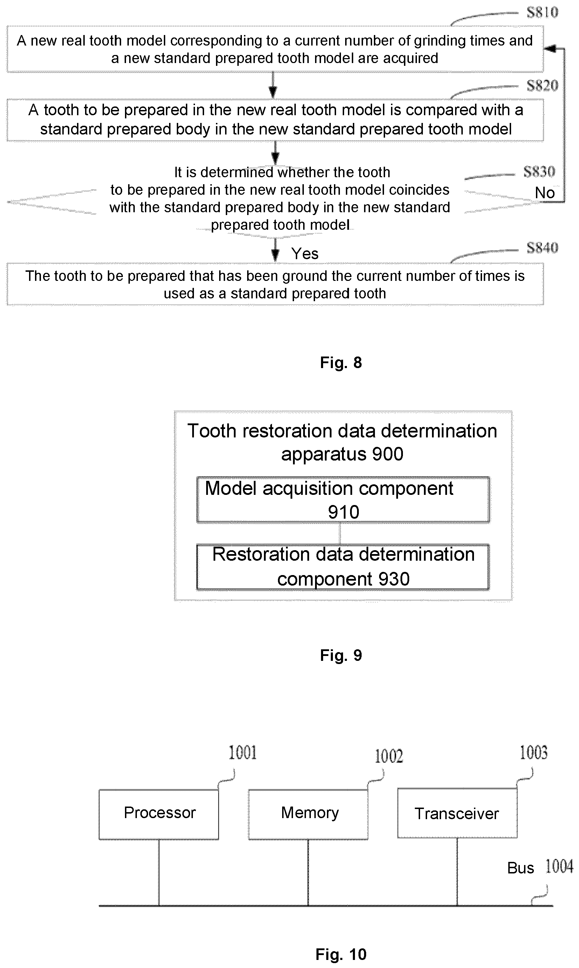

In order to facilitate the understanding of the process of acquiring the target prepared tooth, Fig. 8 shows a logical schematic diagram of acquiring a target prepared tooth provided by one or more embodiments of the present disclosure.

As shown in Fig. 8, the comparison process includes the following steps.

At S810, a new real tooth model corresponding to a current number of grinding times is acquired.

At S820, a tooth to be prepared in the new real tooth model is compared with a standard prepared body in a standard prepared tooth model.

At S830, it is determined whether the tooth to be prepared in the new real tooth model coincides with the standard prepared body in the new standard prepared tooth model.

In some embodiments, in a case that the tooth to be prepared in the new real tooth model coincides with the standard prepared body in the standard prepared tooth model, S840 is performed, otherwise the process returns to perform S810.

At S840, the tooth to be prepared that has been ground the current number of times is used as a standard prepared tooth.

It is to be noted that the specific implementations of various steps in Fig. 8 may refer to the above description, which will not be elaborated herein.

Therefore, in the embodiment of the present disclosure, during the tooth restoration process, three-dimensional scanning data of the tooth ground each time may be acquired, and it may be determined whether the tooth to be prepared that is ground each time meets the standard, thereby obtaining a target prepared tooth that meets the standard for wearing the prosthesis.

The embodiments of the present disclosure further provide an apparatus for determining tooth restoration data for implementing the above tooth restoration data determination method, which is described below in conjunction with Fig. 9. In the embodiment of the present disclosure, the tooth restoration data determination apparatus may be an electronic device or a server. The electronic device may include a device with a communication function such as a tablet computer, a desktop computer, or a notebook computer, or may include a device simulated by a virtual machine or a simulator. The server may be a server cluster or a cloud server.

Fig. 9 shows a schematic structural diagram of an apparatus for determining tooth restoration data provided by one or more embodiments of the present disclosure.

As shown in Fig. 9, an apparatus for determining tooth restoration data 900 may include a model acquisition component 910 and a restoration data determination component 920.

The model acquisition component 910 is configured to acquire a real tooth model of a target object and a standard prepared tooth model corresponding to the real tooth model. The real tooth model includes a tooth to be prepared, the standard prepared tooth model includes a standard prepared body corresponding to the tooth to be prepared, and the standard prepared body is a standard prepared tooth for wearing a prosthesis.

The restoration data determination component 920 is configured to compare the tooth to be prepared in the real tooth model with the standard prepared body in the standard prepared tooth model, so as to obtain data to be restored of the tooth to be prepared. The data to be restored is data to be ground that corresponds to the restoration of the tooth to be prepared to the standard prepared body.

According to the tooth restoration data determination apparatus in the embodiment of the present disclosure, firstly, the real tooth model of the target object and the standard prepared tooth model corresponding to the real tooth model are acquired, where the real tooth model includes the tooth to be prepared, the standard prepared tooth model includes the standard prepared body corresponding to the tooth to be prepared, and the standard prepared body is the standard prepared tooth for wearing the prosthesis; and then, the tooth to be prepared in the real tooth model is compared with the standard prepared body in the standard prepared tooth model, so as to obtain the data to be restored of the tooth to be prepared, where the data to be restored is the data to be ground that corresponds to the restoration of the tooth to be prepared to the standard prepared body. Therefore, the data to be restored for restoring the tooth to be prepared to the standard prepared body may be directly determined by comparing the tooth to be prepared with the standard prepared body, so that the data to be restored can assist the user in restoring the tooth to be prepared, thereby improving the accuracy of tooth restoration. Moreover, the whole process does not need to prepare the silicone rubber guide plate in advance, and is realized automatically and digitally, thereby finally simplifying the flow and reducing the time cost.

In some embodiments of the present disclosure, the model acquisition component 910 may include a morphological data acquisition unit, a standard prepared body determination unit, and a standard prepared tooth model generation unit.

The morphological data acquisition unit is configured to acquire morphological data of the tooth to be prepared in the real tooth model and morphological data of other teeth except the tooth to be prepared.

The standard prepared body determination unit is configured to select the standard prepared body from a plurality of prepared bodies acquired in advance according to the morphological data of the tooth to be prepared and the morphological data of other teeth except the tooth to be prepared.

The standard prepared tooth model generation unit is configured to generate the standard prepared tooth model based on the morphological data of the standard prepared body and the morphological data of other teeth except the tooth to be prepared.

In some embodiments of the present disclosure, the restoration data determination component 920 may include a registration unit and a comparison unit.

The registration unit is configured to register the real tooth model and the standard prepared tooth model to obtain a registration result of the tooth to be prepared and the standard prepared body.

The comparison unit is configured to compare the tooth to be prepared in the real tooth model with the standard prepared body in the standard prepared tooth model based on the registration result to obtain data to be restored of the tooth to be prepared.

In some embodiments of the present disclosure, the registration unit may specifically be configured to extract a feature point pair of each tooth from the real tooth model and the standard tooth model;
match the feature point pairs according to a preset registration direction to obtain an initial matching result of the real tooth model and the standard tooth model;
calculate a distance between the feature point pairs on grid patches respectively included in the real tooth model and the standard tooth model; and
correct the initial matching result based on the distances of all the feature point pairs on the grid patches to obtain a registration result of the tooth to be prepared and the standard prepared body.

In some embodiments of the present disclosure, the comparison unit may specifically be configured to segment a model of the tooth to be prepared from the real tooth model according to the registration result, and segment a standard prepared body model from the standard prepared tooth model; and
calculate a distance between each grid patch on the model of the tooth to be prepared and each grid patch on the standard prepared body model based on normal vectors respectively corresponding to each grid patch on the model of the tooth to be prepared and normal vectors respectively corresponding to each grid patch on the standard prepared body model, and use the distance between each grid patch on the model of the tooth to be prepared and each grid patch on the standard prepared body model as the data to be restored of the tooth to be prepared.

In some embodiments of the present disclosure, the apparatus further includes a display component.

The display component is configured to compare and display the real tooth model and the standard prepared tooth model, and display the data to be restored.

In some embodiments of the present disclosure, the apparatus further includes an iteration component and a target prepared tooth acquisition component.

The iteration component is configured to acquire, in a case where the tooth to be prepared has been ground the current number of times, a new real tooth model of the target object again, and compare the tooth to be prepared in the new real tooth model with the standard prepared body in the standard prepared tooth model to obtain new data to be restored.

The target prepared tooth acquisition component is configured to determine, in a case that the new data to be restored is within a preset restoration data threshold range, that morphological data of the tooth to be prepared that has been ground the current number of times is consistent with morphological data of the standard prepared body, and use the tooth to be prepared that has been ground the current number of times as the standard prepared tooth, where the standard prepared tooth is configured to wear the prosthesis
It is to be noted that the tooth restoration data determination apparatus 900 shown in Fig. 9 may perform various steps in the method embodiments shown in Fig. 1 to Fig. 8, and implement various processes and effects in the method embodiments shown in Fig. 1 to Fig. 8, which will not be elaborated herein.

Fig. 10 shows a schematic structural diagram of a device for determining tooth restoration data provided by one or more embodiments of the present disclosure.

As shown in Fig. 10, the tooth restoration data determination device may include a processor 1001 and a memory 1002 storing computer program instructions.

In some embodiments, the processor 1001 may include a Central Processing Unit (CPU), or an Application Specific Integrated Circuit (ASIC), or may be configured to implement one or more integrated circuits of the embodiments of the present disclosure.

The memory 1002 may include a large capacity memory for information or instructions. By way of example, but not limitation, the memory 1002 may include a Hard Disk Drive (HDD), a floppy disk drive, a flash, an optical disk, a magneto-optical disk, a magnetic tape, or a Universal Serial Bus (USB) drive or a combination of two or more of thereof. Where appropriate, the memory 1002 may include a removable or non-removable (or fixed) medium. Where appropriate, the memory 1002 may be inside or outside an integrated gateway device. In a specific embodiment, the memory 1002 is a non-volatile solid-state memory. In a specific embodiment, the memory 1002 includes a Read-Only Memory (ROM). Where appropriate, the ROM may be a mask-programmed ROM, a Programmable ROM (PROM), an Electrical Programmable ROM (EPROM), an Electrically Erasable Programmable ROM (EEPROM), an Electrically Alterable ROM (EAROM) or a flash, or a combination of two or more thereof.

The processor 1001 reads and executes the computer program instructions stored in the memory 1002 to perform the steps of the tooth restoration data determination method provided by the embodiment of the present disclosure.

In one example, the tooth restoration data determination device may further include a transceiver 1003 and a bus 1004. As shown in Fig. 10, the processor 1001, the memory 1002, and the transceiver 1003 are connected through the bus 1004 and communicate with each other.

The bus 1004 includes hardware, software or both. By way of example, but not limitation, the bus may include an Accelerated Graphics Port (AGP) or other graphics buses, an Extended Industry Standard Architecture (EISA) bus, a Front Side Bus (FSB), a Hyper Transport (HT) interconnect, an Industrial Standard Architecture (ISA) bus, an InfiniBand interconnect, Low Pin Count (LPC) bus, a memory bus, a Micro Channel Architecture (MCA) bus, a Peripheral Component Interconnect (PCI) bus, a PCI-Express (PCI-X) bus, a Serial Advanced Technology Attachment (SATA) bus, a Video Electronics Standards Association Local Bus (VLB) or other suitable buses or a combination of two or more thereof. Where appropriate, the bus 1004 may include one or more buses. Although specific buses are described and illustrated by the embodiments of the present disclosure, the present disclosure considers any suitable bus or interconnection.

One or more embodiments of a computer-readable storage medium provided by the embodiments of the present disclosure is described below. The computer-readable storage medium and the tooth restoration data determination method of the above embodiments belong to the same inventive concept. Details not described in detail in the embodiment of the computer-readable storage medium may refer the embodiments of the above tooth restoration data determination method.

The embodiment provides a storage medium containing computer executable instructions. The computer executable instructions are executed by a computer processor to perform a method for determining tooth restoration data. The method includes the following operations.

A real tooth model of a target object and a standard prepared tooth model corresponding to the real tooth model are acquired. The real tooth model includes a tooth to be prepared, the standard prepared tooth model includes a standard prepared body corresponding to the tooth to be prepared, and the standard prepared body is a standard prepared tooth for wearing a prosthesis.

The tooth to be prepared in the real tooth model is compared with the standard prepared body in the standard prepared tooth model, so as to obtain data to be restored of the tooth to be prepared. The data to be restored is data to be ground that corresponds to the restoration of the tooth to be prepared to the standard prepared body.

Of course, the computer executable instructions of the storage medium containing the computer executable instructions provided by the embodiment of the present disclosure are not limited to the above method operations, and may also perform related operations in the tooth restoration data determination method provided by any embodiment of the present disclosure.

Through the above description of implementations, those skilled in the art may clearly know that the present disclosure may be implemented by means of software and necessary common hardware, certainly by means of hardware, but in many cases, the former is the better implementation. Based on such understanding, the technical solution of the present disclosure substantially or the part making a contribution to the conventional art can be embodied in the form of a software product. The computer software product may be stored in a computer-readable storage medium, such as a computer floppy disk, an ROM, a Random Access Memory (RAM), a flash, a hard disk or an optical disk, etc., including a number of instructions for causing a computer cloud platform (which may be a personal computer, a server, or a network cloud platform, etc.) to perform the tooth restoration data determination method provided by various embodiments of the present disclosure.

It is to be noted that the above are only preferred embodiments of the present disclosure and the technical principles used. Those skilled in the art may understand that the present disclosure is not limited to the specific embodiments herein, and that various obvious changes, readjustments and substitutions can be made by those skilled in the art without departing from the scope of protection of the present disclosure. Therefore, although the present disclosure is described in more detail through the above embodiments, the present disclosure is not limited to the above embodiments, and may include more other equivalent embodiments without departing from the concept of the present disclosure, and the scope of the present disclosure is determined by the scope of the appended claims.

### Industrial Applicability

The present disclosure provides a method for determining tooth restoration data, which may improve the accuracy of tooth restoration. Moreover, the whole process does not need to prepare a silicone rubber guide plate in advance, and is realized automatically and digitally, thereby finally simplifying the flow and reducing the time cost.

## Claims

1. A method for determining tooth restoration data, comprising:
acquiring a real tooth model of a target object and a standard prepared tooth model corresponding to the real tooth model, wherein the real tooth model comprises a tooth to be prepared, the standard prepared tooth model comprises a standard prepared body corresponding to the tooth to be prepared, and the standard prepared body is a standard prepared tooth for wearing a prosthesis; and
comparing the tooth to be prepared in the real tooth model with the standard prepared body in the standard prepared tooth model, to obtain data to be restored of the tooth to be prepared, wherein the data to be restored is data to be ground that corresponds to the restoration of the tooth to be prepared to the standard prepared body.

2. The method as claimed in claim 1, wherein the acquiring the standard prepared tooth model corresponding to the real tooth model comprises:
acquiring morphological data of the tooth to be prepared in the real tooth model and morphological data of other teeth except the tooth to be prepared;
selecting the standard prepared body from a plurality of prepared bodies acquired in advance according to the morphological data of the tooth to be prepared and the morphological data of other teeth except the tooth to be prepared; and
generating the standard prepared tooth model based on the morphological data of the standard prepared body and the morphological data of other teeth except the tooth to be prepared.

3. The method as claimed in claim 1, wherein the comparing the tooth to be prepared in the real tooth model with the standard prepared body in the standard prepared tooth model, to obtain data to be restored of the tooth to be prepared comprises:
registering the real tooth model and the standard prepared tooth model to obtain a registration result of the tooth to be prepared and the standard prepared body; and
comparing the tooth to be prepared in the real tooth model with the standard prepared body in the standard prepared tooth model based on the registration result to obtain data to be restored of the tooth to be prepared.

4. The method as claimed in claim 3, wherein the registering the real tooth model and the standard prepared tooth model to obtain the registration result of the tooth to be prepared and the standard prepared body comprises:
extracting a feature point pair of each tooth from the real tooth model and the standard tooth model;
matching the feature point pairs according to a preset registration direction to obtain an initial matching result of the real tooth model and the standard tooth model;
calculating a distance between the feature point pairs on grid patches respectively comprised in the real tooth model and the standard tooth model; and
correcting the initial matching result based on the distances of all the feature point pairs on the grid patches to obtain a registration result of the tooth to be prepared and the standard prepared body.

5. The method as claimed in claim 3, wherein the comparing the tooth to be prepared in the real tooth model with the standard prepared body in the standard prepared tooth model based on the registration result to obtain data to be restored of the tooth to be prepared comprises:
segmenting a model of the tooth to be prepared from the real tooth model according to the registration result, and segmenting a standard prepared body model from the standard prepared tooth model; and
calculating a distance between each grid patch on the model of the tooth to be prepared and each grid patch on the standard prepared body model based on normal vectors respectively corresponding to each grid patch on the model of the tooth to be prepared and normal vectors respectively corresponding to each grid patch on the standard prepared body model, and using the distance between each grid patch on the model of the tooth to be prepared and each grid patch on the standard prepared body model as the data to be restored of the tooth to be prepared.

6. The method as claimed in claim 1, wherein after comparing the tooth to be prepared in the real tooth model with the standard prepared body in the standard prepared tooth model, to obtain data to be restored of the tooth to be prepared, the method further comprises:
comparatively displaying the real tooth model and the standard prepared tooth model, and displaying the data to be restored.

7. The method as claimed in claim 6, wherein after comparatively displaying the real tooth model and the standard prepared tooth model, and displaying the data to be restored, the method further comprises:
in a case where the tooth to be prepared has been ground the current number of times, acquiring a new real tooth model of the target object, and comparing the tooth to be prepared in the new real tooth model with the standard prepared body in the standard prepared tooth model to obtain new data to be restored; and
in a case that the new data to be restored is within a preset restoration data threshold range, determining that morphological data of the tooth to be prepared that has been ground the current number of times is consistent with morphological data of the standard prepared body, and using the tooth to be prepared that has been ground the current number of times as the standard prepared tooth, wherein the standard prepared tooth is configured to wear a prosthesis.

8. An apparatus for determining tooth restoration data, comprising:
a model acquisition component, configured to acquire a real tooth model of a target object and a standard prepared tooth model corresponding to the real tooth model, wherein the real tooth model comprises a tooth to be prepared, the standard prepared tooth model comprises a standard prepared body corresponding to the tooth to be prepared, and the standard prepared body is a standard prepared tooth for wearing a prosthesis; and
a restoration data determination component, configured to compare the tooth to be prepared in the real tooth model with the standard prepared body in the standard prepared tooth model, so as to obtain data to be restored of the tooth to be prepared, wherein the data to be restored is data to be ground that corresponds to the restoration of the tooth to be prepared to the standard prepared body.

9. A device for determining tooth restoration data, comprising:
a processor; and
a memory, configured to store executable instructions;
wherein the processor is configured to read the executable instructions from the memory and execute the executable instructions to implement the tooth restoration data determination method as claimed in any one of claims 1 to 7.

10. A computer-readable storage medium, in which a computer program is stored, wherein the storage medium stores the computer program, and the computer program, when executed by a processor, causes the processor to implement the tooth restoration data determination method as claimed in any one of claims 1 to 7.
